# EUROPEAN PATENT APPLICATION

(11) **EP 3 395 542 A1**
(43) Date of publication of application: **31.10.2018**
(21) Application number: 18153274.8
(22) Date of filing: 24.01.2018
(51) Int. Cl.: B29C 64/135, B29C 64/232, B29C 64/245

(54) **STEREOLITHOGRAPHY APPARATUS**

(30) Priority: 27.04.2017 CN 201710287191
(71) Applicant: XYZprinting, Inc., New Taipei City 22201 (TW); Kinpo Electronics, Inc., New Taipei City 22201 (TW)
(72) Inventor: Yen, Chao-Yu, 22201 New Taipei City (TW); Huang, Chen-Fu, 22201 New Taipei City (TW); Lee, An-Hsiu, 22201 New Taipei City (TW); Lin, Tsai-Yi, 22201 New Taipei City (TW)
(74) Representative: 2K Patentanwälte Blasberg Kewitz & Reichel

(57) **Abstract**

A stereolithography apparatus including a base, an elevator track, a threaded rod, a sliding bracket, a nut, a plurality of friction-reducing components, and a printing platform. The sliding track is disposed on the base. The threaded rod is disposed on the base and an axial direction of the threaded rod is parallel to the elevator track. The sliding bracket is slidably disposed on the elevator track. The nut is set on the threaded rod to be driven by the threaded rod to slide along the threaded rod. The sliding bracket clamps the nut to be driven by the nut to slide along the elevator track. The friction-reducing components are disposed between the nut and the sliding bracket for the nut to move relatively to the sliding bracket. The printing platform is disposed on the sliding bracket to slide with the sliding bracket along the elevator track.

## Description

### BACKGROUND

### [Technical Field]

The exemplary embodiments relate to a three-dimensional printing apparatus, particularly a stereolithography apparatus.

### [Description of Related Art]

Existing stereolithography apparatuses (SLA) generally include a water tank and a formation liquid equipped in accordance with the water tank. The water tank contains the formation liquid. A common type of printing platform is to configure a printing platform in the water tank, sink the printing platform in the formation liquid, and align the printing platform closely to the liquid surface. The formation liquid on the printing platform is solidified on the printing platform through light radiation and becomes a portion of the product. Then, the printing platform moves toward a direction leaving the water tank, such that the solidified portion of the product sinks into the formation liquid. Afterwards, the formation liquid on the solidified portion of the product is solidified into another portion of the product and stacked onto the first portion. Such steps are repeated until the whole product is stacked into existence.

Generally, the printing platform may move upwards and downwards by being driven by a threaded rod. The printing platform may have a nut that is engaged with the threaded rod, which is configured in an upright position. The threaded rod is able to drive the nut and the printing platform to move along an axial direction of the threaded rod when the threaded rod rotates. When the threaded rod rotates and drives the printing platform to move along the axial direction of the threaded rod, however, the printing platform may inevitably sway horizontally. As a result, the external appearance of the product solidified on the printing platform may have a zig-zag shape, and it thus results in a decrease in the yield of three-dimensional printing.

### SUMMARY

The exemplary embodiments relate to a stereolithography apparatus that is able to prevent the printing platform from swaying horizontally.

An embodiment of the disclosure provides a stereolithography apparatus including a base, an elevator track, a threaded rod, a sliding bracket, a nut, and at least one friction-reducing component. The elevator track is disposed on the base. The threaded rod is disposed on the base and an axial direction of the threaded rod is parallel to the elevator track. The sliding bracket is slidably disposed on the elevator track. The nut is disposed on the threaded rod, so as to be driven by the threaded rod to move along the threaded rod. The sliding bracket clamps the nut, so as to be driven by the nut to slide along the elevator track. The at least one friction-reducing component is disposed between the nut and the sliding bracket, such that the nut is capable of moving relatively to the sliding bracket.

Based on the above, in the stereolithography apparatus of the disclosure, the nut is clamped in the sliding bracket, such that the nut is able to drive the sliding bracket to move along the elevator track when the nut is driven by the threaded rod to move along the axial direction of the threaded rod. The printing platform is thereby driven to move vertically along the elevator track. Moreover, the friction-reducing component is disposed between the sliding bracket and the nut, so as to reduce the friction between the nut and the sliding bracket. Thereby, if the nut is driven by the threaded rod to move vertically and cause undesirable horizontal sway, the nut would not drive the sliding bracket to sway along horizontally. As a result, the printing platform would not be driven to sway along horizontally, either. Hence, the stereolithography apparatus of the disclosure is able to maintain the stability of the printing platform when the printing platform moves vertically and thereby increase the quality of three-dimensional printing.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic view of a stereolithography apparatus in an embodiment of the disclosure.
FIG. 2 is a schematic view of some components of the stereolithography apparatus in an embodiment of the disclosure.
FIG. 3 is a schematic enlarged front view of a portion of the stereolithography apparatus in an embodiment of the disclosure.
FIG. 4 is a schematic view of some components of the stereolithography apparatus in an embodiment of the disclosure.
FIG. 5 is a schematic partial enlarged view of the stereolithography apparatus in an embodiment of the disclosure.
FIG. 6 is a schematic view of some components of the stereolithography apparatus in another embodiment of the disclosure.

### DESCRIPTION OF THE EMBODIMENTS

Exemplary embodiments of the disclosure are described hereinafter with reference to the drawings. Identical reference numerals are used in the descriptions and drawings to indicate identical or similar parts where appropriate.

The aforementioned and other technical contents, features, and effects of the disclosure are presented in detail in the descriptions on each of the embodiments with reference to the drawings below. Directional terms, such as "up", "down", "front", "back", "left", "right", etc., mentioned in the following embodiments merely refer to the directions in the drawings. Hence, the directional terms are used to explain instead of limiting the disclosure. Additionally, identical or similar components are labelled with identical or similar reference numerals in each of the following embodiments.

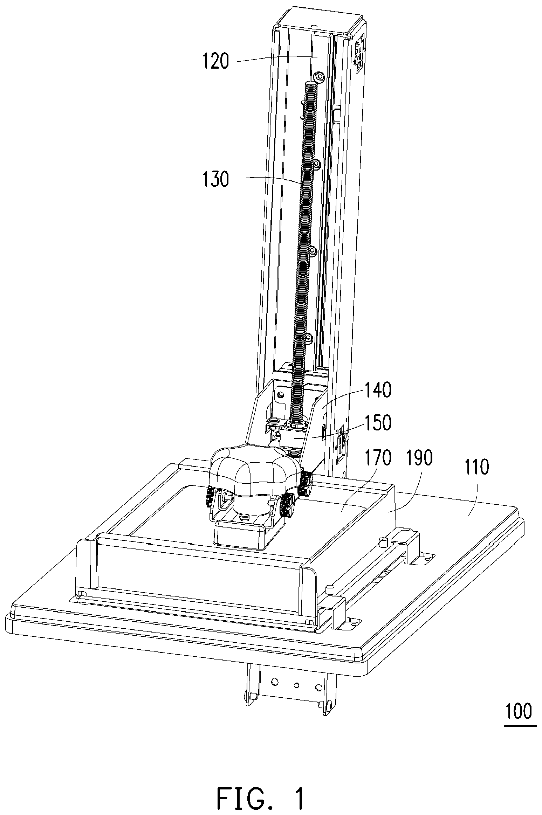

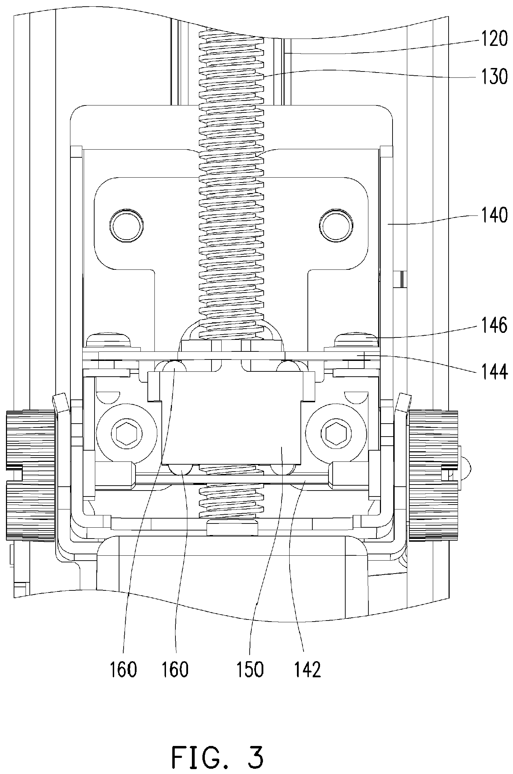

FIG. 1 is a schematic view of a stereolithography apparatus in an embodiment of the disclosure. Referring to FIG. 1, in this embodiment of the disclosure, a stereolithography apparatus 100 includes a base 110, an elevator track 120, a threaded rod 130, a sliding bracket 140, a nut 150, and at least one friction-reducing component 160 (not shown in FIG. 1, please refer to FIG. 3). The elevator track 120 is disposed on the base 110 in an upright position as shown in FIG. 1, wherein an axial direction of the elevator track 120 is, for example, perpendicular to an upper surface of the base 110. The sliding bracket 140 is slidably disposed on the elevator track 120 and is able to slide along the elevator track 120 in a direction towards or away from the base 110. In this embodiment of the disclosure, the stereolithography apparatus 100 further includes a printing platform 170. The printing platform 170 is disposed on the sliding bracket 140 as shown in FIG. 1 and thus is able to slide with the sliding bracket 140 along the elevator track 120 in a direction towards or away from the base 110. In this embodiment of the disclosure, the stereo lithography apparatus 100 further includes a light source and a formation liquid tank 190 arranged on the base 110. The printing platform 170 is disposed above the formation liquid tank 190. The light source and the printing platform 170 are respectively arranged on two opposite sides of the formation liquid tank 190.

In such arrangement, the printing platform 170 is movable and may be driven to sink in a formation liquid, and the light source may be controlled by a controller to move relatively to the base 110, so as to selectively radiate on and solidify the formation liquid on the printing platform 170 to form stacked layers, and the printing platform 170 moves away from the formation liquid tank 190 along the elevator track 120 by layers. By repeating the aforementioned steps, a three-dimensional object may be formed by stacked layer by layer on the printing platform 170.

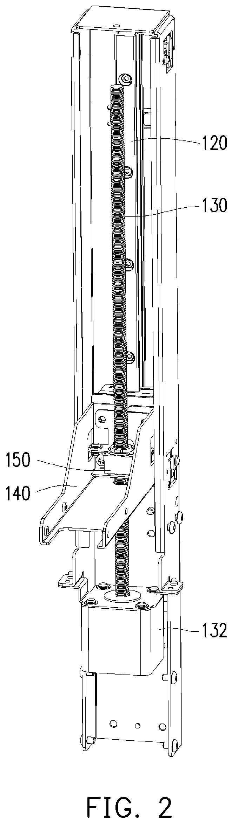

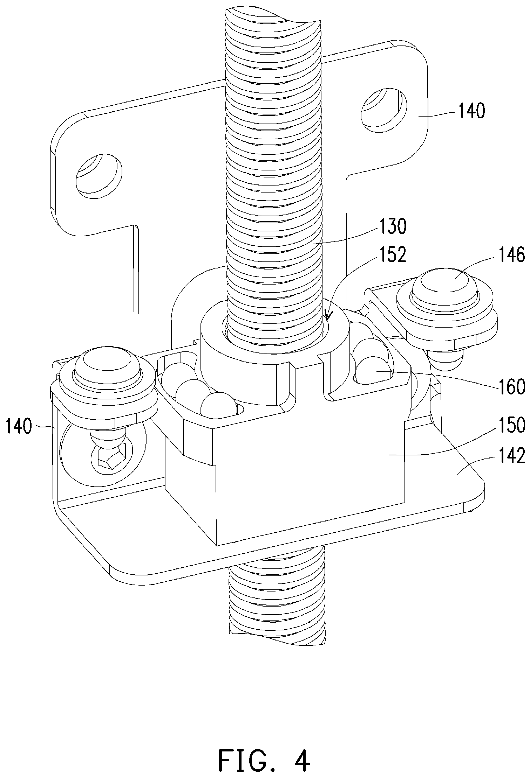

FIG. 2 is a schematic view of some components of the stereolithography apparatus in an embodiment of the disclosure. FIG. 3 is a schematic enlarged front view of a portion of the stereolithography apparatus in an embodiment of the disclosure. FIG. 4 is a schematic view of some components of the stereolithography apparatus in an embodiment of the disclosure. It should be noted that some components such as the printing platform 170, the formation liquid tank 190, etc., in FIG. 1 are omitted in FIG. 2, such that the configuration of the threaded rod 130, the sliding bracket 140, and the nut 150 is more clearly depicted. Besides, a locking plate 144 is also omitted in FIG. 4, such that the friction-reducing components 160 underneath the locking plate 144 are more clearly depicted. Referring to FIG. 2 to FIG. 4, in this embodiment of the disclosure, the threaded rod 130 is disposed on the base 110, the threaded rod 130 may be disposed in the elevator track 120 as shown in FIG. 2, and the axial direction of the threaded rod 130 is parallel to the elevator track 120. Moreover, the stereolithography apparatus 100 may also include a motor 132, which is connected to the threaded rod 130 in order to drive the threaded rod 130 to rotate along the axial direction of the threaded rod 130, as shown in FIG. 2. The nut 150 is set on the threaded rod 130. More specifically, the nut 150 may include a threaded hole 152 as shown in FIG. 4, wherein the threaded rod 130 passes through the threaded hole 152 to be engaged with the threaded hole 152. As a result, the nut 150 may be driven by the threaded rod 130 to move upwards and downwards along the axial direction of the threaded rod 130 when the threaded rod 130 rotates.

In this embodiment of the disclosure, the sliding bracket 140 clamps the nut 150, so as to be driven by the nut 150 to slide along the elevator track 120. The friction-reducing components 160 are disposed between the nut 150 and the sliding bracket 140, such that the nut 150 is able to move relatively to the sliding bracket 140. More specifically, the sliding bracket 140 may include a bottom plate 142 and the locking plate 144 as shown in FIG. 3, wherein the bottom plate 142 is parallel to the base 110 and the locking plate 144 is parallel to the bottom plate 142 and is locked on the sliding bracket 140 through a screw 146. Thereby, the nut 150 is disposed between the bottom plate 142 and the locking plate 144. The friction-reducing components 160 are respectively disposed between the locking plate 144 and the nut 150, and between the bottom plate 142 and the nut 150. In this embodiment of the disclosure, the friction-reducing components 160 may be a plurality of balls (e.g. ball-type bearings) as shown in FIG. 4. Certainly, the disclosure is not limited thereto. Any components or means that can be configured to reduce the friction between the nut 150 and the sliding bracket 140 may be applied to the disclosure.

With such structural configuration, the nut 150 is disposed between the bottom plate 142 of the sliding bracket 140 and the locking plate 144. Thereby, the nut 150 may simultaneously drive the sliding bracket 140 to move along the elevator track 120 when driven by the threaded rod 130 to move along the axial direction (z-axis) of the threaded rod 130. When the threaded rod 130 drives the nut 150 to move along the axial direction (z-axis) of the threaded rod 130, however, it easily causes undesirable sway of the nut 150 along a horizontal direction (x-axis and y-axis; i.e. the directions parallel to the base 110). Accordingly, the friction-reducing components 160 are disposed between the locking plate 144 and the nut 150, and between the bottom plate 142 and the nut 150, so as to reduce the friction between the nut 150 and the sliding bracket 140. Thereby, the nut 150 may move horizontally relatively to the sliding bracket 140 without driving the sliding bracket 140 to sway along horizontally. The sliding bracket 140 thus would not drive the printing platform 170 to sway along horizontally. Hence, the stereolithography apparatus in this embodiment of the disclosure is able to maintain the stability of the printing platform 170 when the printing platform 170 moves vertically and thereby increase the quality of three-dimensional printing.

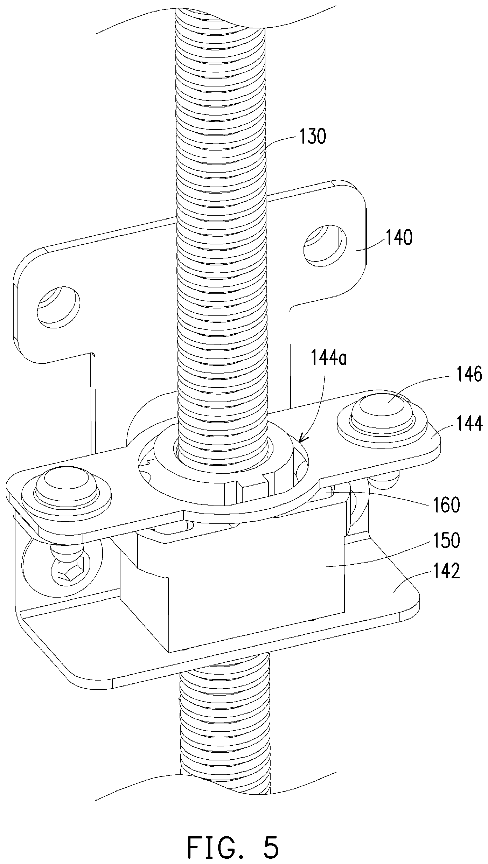

FIG. 5 is a schematic enlarged view of portion of the stereolithography apparatus in an embodiment of the disclosure. Referring to FIG. 4 and FIG. 5, in this embodiment of the disclosure, the locking plate 144 includes a clearance hole 144a. The threaded rod 130 and a portion of the nut 150 pass through the clearance hole 144a of the locking plate 144. A distance is maintained between the portion of the nut 150 and the clearance hole 144a. In this embodiment of the disclosure, the distance is greater than or equal to a sum of a tolerance between the locking plate 144 and the screw 146, a tolerance between the threaded rod 130 and the motor 132 (the motor 132 as shown in FIG. 2), and a tolerance between the motor 132 and a motor base. Hence, the nut 150 may freely sway relatively to the locking plate 144 along the horizontal directions.

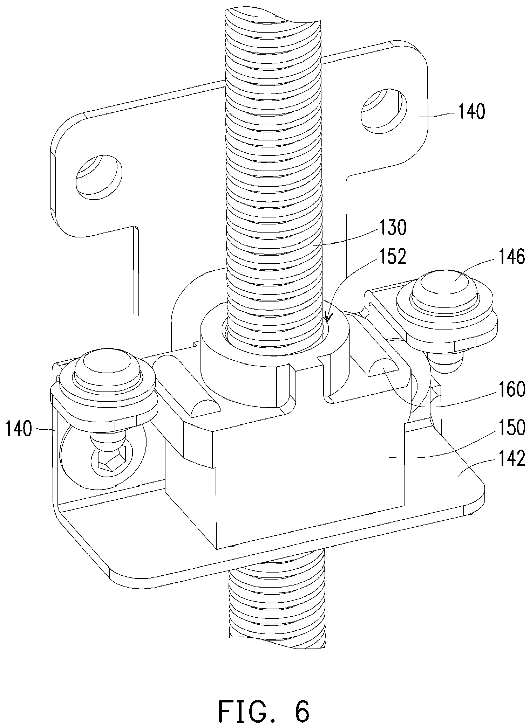

FIG. 6 is a schematic view of some components of a stereolithography apparatus in another embodiment of the disclosure. It should be noted that the locking plate 144 is omitted in FIG. 6, such that the friction-reducing component 160 underneath the locking plate 144 is more clearly depicted. Moreover, the stereolithography apparatus in this embodiment is similar to the stereolithography apparatus 100 in FIG. 1 to FIG. 5. Thereby, the reference numerals for components and part of the content in the previous embodiment continue to be used in this embodiment. Identical reference numerals are applied to show identical or similar components and descriptions on the same technical content are omitted in this embodiment. For the omitted descriptions, please refer to the aforementioned embodiment. Referring to FIG. 6, descriptions on the differences between the stereolithography apparatus in this embodiment and the stereolithography apparatus 100 in FIG. 1 to FIG. 5 are provided as follows.

The friction-reducing component 160 in this embodiment may be a plurality of rollers (e.g. roller-type bearings) as shown in FIG. 6, wherein an axial direction of each of the rollers is parallel to a surface of the base 110. Accordingly, the friction-reducing component 160 in a roller shape is disposed between the sliding bracket 140 and the nut 150, so as to reduce the friction between the nut 150 and the sliding bracket 140. The nut 150 may thereby freely move horizontally (e.g. a direction perpendicular to the axial direction of the friction-reducing component 160 in a roller shape) relatively to the sliding bracket 140. Thereby, the nut 150 would not drive the sliding bracket 140 to sway along horizontally when the nut 150 is driven by the threaded rod 130 to move vertically, so as to avoid undesirable horizontal sway. Consequently, the printing platform 170 would not be driven to sway along horizontally, either. Hence, the stereolithography apparatus in this embodiment of the disclosure is able to maintain the stability of the printing platform 170 when the printing platform 170 moves vertically and thereby increase the quality of three-dimensional printing.

## Claims

1. A stereolithography apparatus (100) comprising:
a base (110);
an elevator track (120) disposed on the base (110);
a threaded rod (130) disposed on the base (110), wherein an axial direction of the threaded rod (130) is parallel to the elevator track (120);
a sliding bracket (140) slidably disposed on the elevator track (120);
a nut (150) disposed on the threaded rod (130), so as to be driven by the threaded rod (130) to move along the axial direction of the threaded rod(130), wherein the sliding bracket (140) clamps the nut (150), so as to be driven by the nut (150) to slide along the elevator track (120); and
at least one friction-reducing component (160) disposed between the nut (150) and the sliding bracket (140), such that the nut (150) is capable of moving relatively to the sliding bracket (140).

2. The stereolithography apparatus (100) of claim 1, further comprising a printing platform (170) disposed on the sliding bracket (140), so as to slide with the sliding bracket (140) along the elevator track (120), and a formation liquid tank (190) disposed on the base (110), wherein the printing platform (170) is disposed above the formation liquid tank (190).

3. The stereolithography apparatus (100) as claimed in any one of claims 1 and 2, wherein the nut (150) further comprises a threaded hole (152), and the threaded rod (130) passes through the threaded hole (152) and is engaged with the threaded hole (152).

4. The stereolithography apparatus (100) as claimed in any one of claims 1-3, wherein the sliding bracket (140) further comprises a bottom plate (142) and a locking plate (144), the bottom plate (142) is parallel to the base (110), the locking plate (144) is parallel to the bottom plate (142) and is locked to the sliding bracket (140), and the nut (150) is disposed between the bottom plate (142) and the locking plate (144).

5. The stereolithography apparatus (100) of claim 4, wherein the at least one friction-reducing component (160) is disposed between the locking plate (144) and the nut (150).

6. The stereolithography apparatus (100) of claim 4, wherein the at least one friction-reducing component (160) is disposed between the bottom plate (142) and the nut (150).

7. The stereolithography apparatus (100) as claimed in any one of claims 4-6, wherein the locking plate (144) comprises a clearance hole (144a), and the threaded rod (130) and a portion of the nut (150) pass through the clearance hole (144a).

8. The stereolithography apparatus (100) as claimed in any one of claims 4-7, further comprising a screw (146) and a motor (132), wherein the locking plate (144) is locked to the sliding bracket (140) by the screw (146), the motor (132) is connected to the threaded rod (130), so as to drive the threaded rod (130) to rotate along the axial direction of the threaded rod (130), and the locking plate (144) comprises a clearance hole (144a), the threaded rod (130) and a portion of the nut (150) pass through the clearance hole (144a), a distance is maintained between the portion of the nut (150) and the clearance hole (144a), the distance is greater than or equal to a sum of a tolerance between the locking plate (144) and the screw (146), a tolerance between the threaded rod (130) and the motor (132), and a tolerance between the motor (132) and a motor base.

9. The stereolithography apparatus (100) as claimed in any one of claims 1-8, wherein the at least one friction-reducing component (160) comprises a plurality of balls.

10. The stereolithography apparatus (100) as claimed in any one of claims 1-8, wherein the at least one friction-reducing component (160) comprises a plurality of rollers, and an axial direction of each of the rollers is parallel to the base (110).
